(19) Europäisches Patentamt
European Patent Office
Office européen des brevets

(11) **EP 4 582 789 A1**

(12) **EUROPEAN PATENT APPLICATION**
published in accordance with Art. 153(4) EPC

(43) Date of publication:
**09.07.2025 Bulletin 2025/28**

(51) International Patent Classification (IPC):
*G01N 21/17* (2006.01)     *G01N 21/3504* (2014.01)
*G01N 21/39* (2006.01)     *G01N 21/01* (2006.01)

(21) Application number: **22957153.4**

(22) Date of filing: **10.11.2022**

(86) International application number:
**PCT/CN2022/131048**

(87) International publication number:
**WO 2024/045341 (07.03.2024 Gazette 2024/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **01.09.2022 CN 202211064408**

(71) Applicants:
• **Electric Power Research Institute.
China Southern Power Grid
Guangzhou, Guangdong 510663 (CN)**
• **Maintenance & Test Centre, CSG EHV
Power Transmission Company
Guangzhou, Guangdong 510700 (CN)**

(72) Inventors:
• **WANG, Dibo
Guangzhou, Guangdong 510663 (CN)**
• **LIAO, Jianping
Guangzhou, Guangdong 510663 (CN)**
• **ZHUO, Ran
Guangzhou, Guangdong 510663 (CN)**
• **LIU, Zhifeng
Guangzhou, Guangdong 510663 (CN)**
• **GAO, Fan
Guangzhou, Guangdong 510663 (CN)**
• **CHENG, Chuanhui
Guangzhou, Guangdong 510663 (CN)**

(74) Representative: **Isarpatent
Patent- und Rechtsanwälte
Barth Hassa Peckmann & Partner mbB
Friedrichstraße 31
80801 München (DE)**

(54) **PHOTOACOUSTIC SPECTROMETRY-BASED GAS TESTING APPARATUS**

(57)     A photoacoustic spectrometry-based gas testing apparatus, provided with a laser emitting assembly, a first photoacoustic cell, an acoustic signal detection assembly, a signal amplification assembly, a phase detection assembly and a visible light emitting assembly. An output end of the laser emitting assembly is aligned with an incident end of the first photoacoustic cell. The sound signal detection assembly is accommodated in the first photoacoustic cell, and an output end of the sound signal detection assembly is connected to an input end of the signal amplification assembly. An output end of the signal amplification assembly is connected to an input end of the phase detection assembly. An output end of the phase detection assembly is connected to the laser emitting assembly. The visible light emitting assembly is used for emitting visible light to an emergent end of the first photoacoustic cell. The visible light emitting assembly emits visible light to the emergent end of the first photoacoustic cell; after transmitting through the first photoacoustic cell, the visible light is propagated to the laser emitting assembly to form a calibration light path; and the positions of the laser emitting assembly and the first photoacoustic cell are adjusted according to the calibration light path, thus achieving calibration of a testing light path.

FIG. 1

**Description**

This application claims the priority to Chinese Patent Application No. 202211064408.6, titled "PHOTOACOUSTIC SPECTROMETRY-BASED GAS TESTING APPARATUS", filed on September 1, 2022, with the China National Intellectual Property Administration, which is incorporated herein by reference in its entirety.

**FIELD**

The present disclosure relates to the technical field of gas detection, and in particular to an apparatus for detecting a gas based on photoacoustic spectroscopy.

**BACKGROUND**

Photoacoustic spectroscopy is a spectral analysis technology based on the photoacoustic effect. It has been over a hundred years since Bell discovered the photoacoustic effect in solids in 1880. In recent years, with the maturation of semiconductor laser technology, gas detection based on photoacoustic spectroscopy analysis technology has become a research hotspot, which has advantages such as high detection sensitivity, fast response, continuous real-time monitoring, compact size, and the ability to detect multiple gas components, and is widely used in petrochemical analysis, air pollution detection, coal mine gas concentration monitoring, dissolved gas analysis in transformer oil, medical exhaled gas diagnosis, and other fields. Photoacoustic spectroscopy measures the impact of absorbed light on substances through acoustic detection. The working principle thereof is as follows: a gas to be detected is dissolved in a background gas (such as air, nitrogen, or inert gas); the gas flows through a photoacoustic cell; when the wavelength of the gas to be detected corresponds to an absorption peak of the gas to be detected, a laser beam propagating in the photoacoustic cell immediately excites the background gas; heat repeatedly generated from the absorption creates a pressure fluctuation in the photoacoustic cell; the pressure fluctuation is detected by a microphone inside the photoacoustic cell; and the gas to be detected is identified and the concentration of the gas to be detected is measured based on the laser wavelength and a recorded acoustic intensity.

Conventional apparatuses for detecting gases based on photoacoustic spectroscopy lack optical path calibration components, failing to calibrate optical path deviations caused by internal vibrations due to movement. Such optical path deviations may affect the detection results.

**SUMMARY**

An apparatus for detecting a gas based on photoacoustic spectroscopy is provided according to the present disclosure, to solve the technical problem that apparatuses for detecting gases based on photoacoustic spectroscopy fail to calibrate optical path deviations caused by internal vibrations due to movement in the conventional technology.

An apparatus for detecting a gas based on photoacoustic spectroscopy is provided according to the present disclosure, including: a laser emission assembly, a first photoacoustic cell, an acoustic signal detection assembly, a signal amplification assembly, a phase detection assembly, and a visible light emission assembly. An output end of the laser emission assembly is aligned with an incident end of the first photoacoustic cell. The acoustic signal detection assembly is arranged within the first photoacoustic cell, and an output end of the acoustic signal detection assembly is connected to an input end of the signal amplification assembly. An output end of the signal amplification assembly is connected to an input end of the phase detection assembly. An output end of the phase detection assembly is connected to the laser emission assembly. The visible light emission assembly is configured to emit visible light towards an exit end of the first photoacoustic cell.

In a first possible implementation of the apparatus, the laser emission assembly includes a laser and a function signal generator. An output end of the function signal generator is connected to an input end of the laser. An output end of the laser is aligned with the incident end of the first photoacoustic cell.

In a second possible implementation of the apparatus, the apparatus further includes a collimator. One end of the collimator is aligned with the output end of the laser emission assembly, and the other end of the collimator is aligned with the incident end of the first photoacoustic cell.

In a third possible implementation of the apparatus, the apparatus further includes a second photoacoustic cell and a photoelectric detection assembly. The second photoacoustic cell is configured to contain a background gas. An incident end of the second photoacoustic cell is aligned with the exit end of the first photoacoustic cell, and an exit end of the second photoacoustic cell is aligned with an input end of the photoelectric detection assembly. Alternatively, the first photoacoustic cell is aligned with the input end of the photoelectric detection assembly.

In combination with the third possible implementation of the apparatus, in a fourth possible implementation of the apparatus, the apparatus further includes a waveform display assembly. An input end of the waveform display assembly is connected to an output end of the photoelectric detection assembly. The waveform display assembly is signal-connected to the phase detection assembly.

In combination with the third possible implementation of the apparatus, in a fifth possible implementation of the apparatus, the visible light emission assembly includes a visible light source and a beam splitter. A first exit direction of the beam splitter corresponds to the incident end of the second photoacoustic cell, a second exit direction of the beam splitter corresponds to the exit end of the first photoacoustic cell, and an incident direction of the beam splitter corresponds to an output end of the visible light source.

In combination with the third possible implementation of the apparatus, in a sixth possible implementation of the apparatus, the visible light emission assembly includes a visible light source, a beam splitter, and a reflector. A first exit direction of the beam splitter corresponds to the incident end of the second photoacoustic cell, a second exit direction of the beam splitter corresponds to the exit end of the first photoacoustic cell, and an incident direction of the beam splitter corresponds to a reflection position of the reflector. An output end of the visible light source corresponds to the reflection position.

In combination with the sixth possible implementation of the apparatus, in a seventh possible implementation of the apparatus, the reflector is a concave reflector.

In combination with any one of the third and the fourth possible implementations of the apparatus, in an eighth possible implementation of the apparatus, the photoelectric detection assembly is a photodetector; and the waveform display assembly is an oscilloscope.

In combination with any one of the above possible implementations of the apparatus, in a ninth possible implementation of the apparatus, the acoustic signal detection assembly is a capacitive microphone; the signal amplification assembly is a preamplifier; and the phase detection assembly is a lock-in amplifier.

It can be seen from the above technical solutions that the present disclosure has the following advantages.

An apparatus for detecting a gas based on photoacoustic spectroscopy according to the present disclosure is provided with a laser emission assembly, a first photoacoustic cell, an acoustic signal detection assembly, a signal amplification assembly, a phase detection assembly, and a visible light emission assembly. An output end of the laser emission assembly is aligned with an incident end of the first photoacoustic cell. The acoustic signal detection assembly is arranged within the first photoacoustic cell, and an output end of the acoustic signal detection assembly is connected to an input end of the signal amplification assembly. An output end of the signal amplification assembly is connected to an input end of the phase detection assembly. An output end of the phase detection assembly is connected to the laser emission assembly. The visible light emission assembly is configured to emit visible light towards an exit end of the first photoacoustic cell. By configuring the visible light emission assembly to emit visible light towards the exit end of the first photoacoustic cell, the visible light propagates through the first photoacoustic cell to the laser emission assembly, forming a calibration optical path that coincides with a standard detection optical path. By regulating the positions of the laser emission assembly and the first photoacoustic cell based on the calibration optical path, the calibration of the detection optical path is achieved.

## BRIEF DESCRIPTION OF THE DRAWINGS

For more clearly illustrating embodiments of the present disclosure or the technical solutions in the conventional technology, drawings referred to describe the embodiments or the conventional technology will be briefly described hereinafter. Apparently, the drawings in the following description are only some embodiments of the present disclosure, and for those skilled in the art, other drawings may be obtained based on these drawings without any creative efforts.

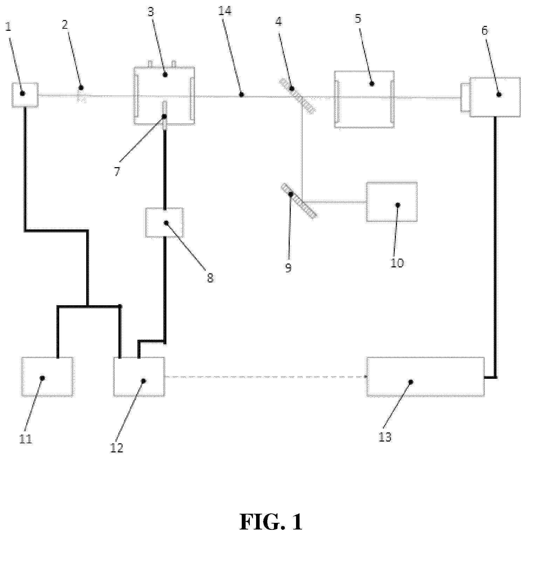

FIG. 1 is a schematic structural diagram of an apparatus for detecting a gas based on photoacoustic spectroscopy according to an embodiment of the present disclosure; where

| 1: | Laser, | 2: | Collimator, | 3: | First photoacoustic cell, |
|----|--------|-----|-------------|-----|---------------------------|
| 4: | Beam splitter, | 5: | Second photoacoustic cell, | 6: | Photodetector, |
| 7: | Capacitive microphone, | 8: | Preamplifier, | 9: | Reflector, |
| 10: | Visible light source, | 11: | Function signal generator, | 1 : | Lock-in amplifier, |
| 13: | Oscilloscope, | 14: | Calibration optical path. | | |

## DETAILED DESCRIPTION

An apparatus for detecting a gas based on photoacoustic spectroscopy is provided according to the embodiments of the present disclosure, to solve the technical problem that apparatuses for detecting gases based on photoacoustic spectroscopy fail to calibrate optical path deviations caused by internal vibrations due to movement in the conventional technology.

Hereinafter technical solutions in embodiments of the present disclosure are described clearly and completely in conjunction with the drawings in embodiments of the present closure to improve clarity and intelligibility of objectives, features, and advantages of the present disclosure. Apparently, the described embodiments are only some rather than all of the embodiments of the present disclosure. All other embodiments obtained by those skilled in the art based on the embodiments of the present disclosure without any creative work fall in the protection scope of the present disclosure.

In the description of the embodiments of the present disclosure, it should be noted that the orientation or positional relationships indicated by the terms such as "central", "upper", "lower", "left", "right", "vertical", "horizontal", "inner", and "outer", are based on the orientation or positional relationships shown in the drawings, which are only used to facilitate the description of the present disclosure and to simplify the description, rather than indicating or implying that the devices or elements referred to must have a specific orientation or can only be configured and operated in a specific orientation. Therefore, the above-mentioned terms should not be construed as limitations to the present disclosure. Furthermore, the terms "first", "second" and "third" are used for descriptive purposes only and are not to be construed as indicating or implying relative importance.

In the description of the embodiments of the present disclosure, it should be noted that, otherwise clearly specified or limited, terms such as "mounting", "joint" and "connection" should be understood in a broad sense, for example, understood as in a fixed connection, a detachable connection or an integral connection; in a mechanical connection or an electrical connection; in a direct connection or an indirect connection through an intermediate medium, or an internal connection inside two components. For those skilled in the art, the specific meanings of the above terms in the present disclosure can be understood in the light of specific conditions.

Conventional apparatuses for detecting gases based on photoacoustic spectroscopy lack optical path calibration components, failing to calibrate optical path deviations caused by internal vibrations due to movement. Such optical path deviations may affect the detection results.

Referring to FIG. 1, a schematic structural diagram of an apparatus for detecting a gas based on photoacoustic spectroscopy is provided according to an embodiment of the present disclosure. The apparatus includes a laser emission assembly, a first photoacoustic cell 3, an acoustic signal detection assembly, a signal amplification assembly, a phase detection assembly, and a visible light emission assembly. An output end of the laser emission assembly is aligned with an incident end of the first photoacoustic cell 3. The acoustic signal detection assembly is arranged within the first photoacoustic cell 3, and an output end of the acoustic signal detection assembly is connected to an input end of the signal amplification assembly. An output end of the signal amplification assembly is connected to an input end of the phase detection assembly. An output end of the phase detection assembly is connected to the laser emission assembly. The visible light emission assembly is configured to emit visible light towards an exit end of the first photoacoustic cell 3.

It should be noted that the laser emission assembly is configured to generate monochromatic laser light. Any device capable of generating monochromatic laser light that meets the requirements may be used, such as an Ar ion laser, a He-Ne laser, a CO2 laser, a semiconductor laser, and the like. Additionally, to obtain modulated laser light, devices for amplitude and frequency modulation of the laser light are required, such as a mechanical chopper, a function signal generator, and the like.

The first photoacoustic cell 3 is a sealed container filled with a background gas, a gas to be detected, and the acoustic signal detection assembly. A beam of intensity-modulated monochromatic light irradiates the gas to be detected sealed in the photoacoustic cell. The gas to be detected absorbs light energy and is de-excited by releasing thermal energy. The released thermal energy periodically heats the background gas and the gas to be detected at a modulation frequency of the monochromatic light, causing periodic pressure fluctuations for the background gas and the gas to be detected. This is the photoacoustic effect, which may be used to detect gas concentrations.

The acoustic signal detection assembly is configured to detect the pressure fluctuation in the photoacoustic cell and convert the pressure fluctuation into an electrical signal. Any device capable of detecting the pressure fluctuation may be used, such as a microphone, a piezoelectric ceramic microphone, and the like.

The signal amplification assembly is configured to amplify the electrical signal generated by the acoustic signal detection assembly due to the pressure fluctuation. Any device capable of amplifying the electrical signal may be used, such as an amplifier.

The phase detection assembly is configured to separate and further amplify a specific carrier frequency corresponding to the gas to be detected from the electrical signal amplified by the signal amplification assembly. That is, the phase detection assembly is configured to demodulate the electrical signal amplified by the signal amplification assembly into a photoacoustic signal related to concentration of the gas to be detected, so as to calculate the concentration of the gas to be detected based on the photoacoustic signal. Any device capable of performing the above function may be used, such as a lock-in amplifier 12.

The visible light emission assembly is configured to generate a visible light beam. Any device capable of stably generating the visible light beam may be used, such as a visible red light source 10, a visible green light source, and the like. The visible light beam enters from the exit end of the first photoacoustic cell 3, exits from the incident end of the first photoacoustic cell 3, and propagates towards the laser emission assembly, eventually entering the laser emission assembly from the output end of the laser emission assembly, and forming a calibration optical path 14 that coincides with a standard detection optical path. By regulating the positions of the laser emission assembly and the first photoacoustic cell 3 based on the calibration optical path 14, a deviation in a detection optical path caused by an internal vibration due to moving the apparatus for detecting the gas based on photoacoustic spectroscopy may be eliminated. The detection optical path is a laser propagation path used for gas detection, and the standard detection optical path is a laser propagation path before any deviation occurs.

The output end of the laser emission assembly is aligned with the incident end of the first photoacoustic cell 3, so that a modulated monochromatic laser light generated by the laser emission assembly enters the first photoacoustic cell 3, inducing the photoacoustic effect between the gas to be detected inside the first photoacoustic cell 3 and the laser light.

The acoustic signal detection assembly is arranged within the first photoacoustic cell 3 to detect the pressure fluctuation inside the first photoacoustic cell 3. The output end of the acoustic signal detection assembly is connected to the input end of the signal amplification assembly, transmitting the electrical signal converted from the pressure fluctuation to the signal amplification assembly. The signal amplification assembly amplifies the electrical signal.

The output end of the signal amplification assembly is connected to the input end of the phase detection assembly, transmitting the amplified electrical signal to the phase detection assembly. The phase detection assembly separates and further amplifies the specific carrier frequency corresponding to the gas to be detected from the amplified electrical signal.

The output end of the phase detection assembly is connected to the laser emission assembly, feeding back the specific carrier frequency corresponding to the gas to be detected to the laser emission assembly. The laser emission assembly modulates a laser to the specific carrier frequency to form the detection optical path for gas detection, improving detection accuracy.

This embodiment has the following beneficial effects.

1. By configuring the visible light emission assembly to emit visible light towards the exit end of the first photoacoustic cell 3, the visible light propagates through the first photoacoustic cell 3 to the laser emission assembly, forming the calibration optical path 14 that coincides with the standard detection optical path. By regulating the positions of the laser emission assembly and the first photoacoustic cell 3 based on the calibration optical path 14, the calibration of the detection optical path is achieved.

2. By configuring the visible light emission assembly to form a visible calibration optical path 14, the calibration of the detection optical path becomes more intuitive, facilitating the calibration of the detection optical path and improving calibration efficiency.

In a preferred embodiment, the laser emission assembly includes a laser 1 and a function signal generator 11. An output end of the function signal generator 11 is connected to an input end of the laser 1, and an output end of the laser 1 is aligned with the incident end of the first photoacoustic cell 3. The function signal generator 11 generates a voltage waveform signal at a specific frequency to provide driving current for the laser 1. The laser 1 generates an infrared laser light at the specific frequency based on the driving current. The infrared laser light is emitted from the output end of the laser 1 and propagates towards the first photoacoustic cell 3, entering the first photoacoustic cell 3 from the incident end of the first photoacoustic cell 3 to induce the photoacoustic effect with the gas to be detected.

In a preferred embodiment, to maximize the coupling efficiency of the infrared laser light into the first photoacoustic cell 3, a collimator 2 is further provided in the apparatus for detecting the gas based on photoacoustic spectroscopy. One end of the collimator 2 is aligned with the output end of the laser emission assembly, and the other end thereof is aligned with the incident end of the first photoacoustic cell 3. More specifically, the collimator 2 is arranged between the laser 1 and the first photoacoustic cell 3, with one end thereof aligned with the output end of the laser 1 and the other end thereof aligned with the incident end of the first photoacoustic cell 3. In this way, the infrared laser light emitted by the laser 1 enters the first photoacoustic cell 3 after collimated by the collimator 2.

In a preferred embodiment, since a background gas in the first photoacoustic cell 3 has a slight absorption of the infrared laser light, the photoacoustic signal detected by the acoustic signal detection assembly includes noise caused by the background gas, reducing a signal-to-noise ratio of the detection. To eliminate this defect, a second photoacoustic cell 5 for containing the background gas and a photoelectric detection assembly for detecting the laser intensity are provided in the apparatus for detecting the gas based on photoacoustic spectroscopy. An incident end of the second photoacoustic cell 5 is aligned with the exit end of the first photoacoustic cell 3, and an exit end of the second photoacoustic cell 5 is aligned with an input end of the photoelectric detection assembly. That is, the second photoacoustic cell 5 is arranged between the first photoacoustic cell 3 and the photoelectric detection assembly. In this way, the infrared laser light emitted from the exit end of the first photoacoustic cell 3 propagates towards the second photoacoustic cell 5, enters the second photoacoustic cell 5 from the incident end of the second photoacoustic cell 5, exits from the exit end of the second photoacoustic cell 5, propagates towards the photoelectric detection assembly and enters the photoelectric detection assembly from the input end of the photoelectric detection assembly. Alternatively, the exit end of the first photoacoustic cell 3 is aligned with the input end of the photoelectric detection assembly, that is, the second photoacoustic cell 5 is removed from between the first photoacoustic cell 3 and the photoelectric detection assembly. In this way, the infrared laser light emitted from the exit end of the first photoacoustic cell 3 propagates towards the photoelectric detection assembly and enters the photoelectric detection assembly from the input end of the photoelectric detection assembly. The infrared laser light emitted by the laser 1 passes through the first photoacoustic cell 3 and the second photoacoustic cell 5 sequentially. The infrared laser light is absorbed by the gas to be detected in the first photoacoustic cell 3, causing attenuation, and is slightly absorbed by the background gas in the first photoacoustic cell 3 and the second photoacoustic cell 5. Thus, the concentration of the gas to be detected in the first photoacoustic cell 3 may be indirectly measured using the photoacoustic spectroscopy method, or directly measured using an infrared absorption method by the photoelectric detection assembly. The difference between the two methods is that the photoacoustic spectroscopy method has higher measurement accuracy, while the infrared absorption method can detect the intensity of the infrared laser light using the photoelectric detection assembly. When the second photoacoustic cell 5 is arranged between the first photoacoustic cell 3 and the photoelectric detection assembly, the photoelectric detection assembly detects the intensity of the infrared laser light after passing through the first photoacoustic cell 3 and the second photoacoustic cell 5. A difference between the intensity and an initial intensity is calculated as an absorption light intensity A1. A1 represents a total light intensity of the infrared laser light absorbed by the gas to be detected and background gas in the first photoacoustic cell 3 and the background gas in the second photoacoustic cell 5. When the second photoacoustic cell 5 is removed from between the first photoacoustic cell 3 and the photoelectric detection assembly, the photoelectric detection assembly detects the intensity of the infrared laser light after passing through the first photoacoustic cell 3. A difference between the intensity and the initial intensity is calculated as an absorption light intensity A2. A2 represents a total light intensity of the infrared laser light absorbed by the gas to be detected and background gas in the first photoacoustic cell 3. The relationship between the absorption light intensity and the concentration of the gas to be detected follows the Beer-Lambert law. After applying the Taylor transformation to the Beer-Lambert law, a mathematical relationship shown in the following equation is obtained. By substituting A1 into the equation, a corresponding concentration $\varphi$1 of the gas to be detected is calculated. By substituting A2 into the equation, a corresponding concentration $\varphi$2 of the gas to be detected is calculated. A difference between $\varphi$1 and $\varphi$2 represents an error caused by the background gas in the second photoacoustic cell 5, and the error is equal to an error caused by the background gas in the first photoacoustic cell 3. Therefore, subtracting the error from the concentration of the gas to be detected calculated using the photoacoustic spectroscopy method eliminates the noise caused by the background gas, improving the signal-to-noise ratio.

$$\varphi \approx \frac{1}{a_\lambda L} A_\lambda$$

In the equation, $\varphi$ represents the concentration of the gas to be detected, $a_\lambda$ represents an absorption coefficient (a fixed value) at a corresponding wavelength, L represents an optical path length, and $A_\lambda$ represents an absorption light intensity.

In a preferred embodiment, to facilitate real-time observation of the infrared laser light intensity, a waveform display assembly is provided in the apparatus for detecting the gas based on photoacoustic spectroscopy. An input end of the waveform display assembly is connected to an output end of the photoelectric detection assembly. In this way, the infrared laser light intensity detected by the photoelectric detection assembly is transmitted to the waveform display assembly for real-time display. The waveform display assembly is signal-connected to the phase detection assembly. In this way, the photoacoustic signal related to the concentration of the gas to be detected modulated by the phase detection assembly is wirelessly transmitted to the waveform display assembly for real-time display.

A preferred implementation of the visible light emission assembly is as follows. The visible light emission assembly includes a visible light source and a beam splitter 4. A first exit direction of the beam splitter 4 corresponds to the incident end of the second photoacoustic cell 5, a second exit direction of the beam splitter 4 corresponds to the exit end of the first photoacoustic cell 3, and an incident direction of the beam splitter 4 corresponds to an output end of the visible light source. In this way, a visible light beam emitted by the visible light source is split into two visible light beams by the beam splitter 4. A propagation path of one beam is: the exit end of the first photoacoustic cell 3 > the incident end of the first photoacoustic cell 3 > the collimator 2 > the output end of the laser 1. A propagation path of the other beam is: the incident end of the second photoacoustic cell 5 > the exit end of the second photoacoustic cell 5 > the input end of the photoelectric detection assembly. The propagation paths of the two visible light beams are combined to form the calibration optical path 14 that coincides with the standard detection optical path. In this case, a propagation path of the infrared laser light corresponding to the detection optical path is: the output end of the laser 1 > the collimator 2 > the incident end of the first photoacoustic cell 3 > the exit end of the first photoacoustic cell 3 > the beam splitter 4 > the incident end of the second photoacoustic cell 5 > the exit end of the second photoacoustic cell 5 > the input end of the photoelectric detection assembly.

In a further preferred embodiment, to enhance the adjustability of the calibration optical path 14, a reflector is provided for the visible light emission assembly. In this case, the first exit direction of the beam splitter 4 corresponds to the incident end of the second photoacoustic cell 5, the second exit direction of the beam splitter 4 corresponds to the exit end of the first photoacoustic cell 3, and the incident direction of the beam splitter 4 corresponds to a reflection position of the reflector. The output end of the visible light source corresponds to the reflection position of the reflector. In this way, the visible light beam emitted by the visible light source is reflected by the reflector and then enters the beam splitter 4, and is split into two visible light beams by the beam splitter 4. A propagation path of one beam is: the exit end of the first photoacoustic cell 3 > the incident end of the first photoacoustic cell 3 > the collimator 2 > the output end of the laser 1. A propagation path of the other beam is: the incident end of the second photoacoustic cell 5 > the exit end of the second photoacoustic cell 5 > the input end of the photoelectric detection assembly. The propagation paths of the two visible light beams are combined to form the calibration optical path 14 that coincides with the standard detection optical path. In this case, a propagation path of the infrared laser light corresponding to the detection optical path is: the output end of the laser 1 > the collimator 2 > the incident end of the first photoacoustic cell 3 > the exit end of the first photoacoustic cell 3 > the beam splitter 4 > the incident end of the second photoacoustic cell 5 > the exit end of the second photoacoustic cell 5 > the input end of the photoelectric detection assembly. By regulating the positions of the reflector and the beam splitter 4, the calibration optical path 14 can be regulated.

In a preferred embodiment, the photoelectric detection assembly is a photodetector 6; the waveform display assembly is an oscilloscope 13; the acoustic signal detection assembly is a capacitive microphone 7; the signal amplification assembly is a preamplifier 8; the phase detection assembly is a lock-in amplifier 12; the visible light source is a visible red light source 10; and the reflector is a concave reflector 9.

The above embodiments are only intended to describe the technical solutions of the present disclosure, and not to limit the present disclosure. Although the present disclosure is described in detail with reference to the above embodiments, those skilled in the art should understand that, modifications can be made to the technical solutions recorded in the above embodiments, or equivalent replacements can be made to some of the technical features thereof, and the modifications and the replacements will not make the corresponding technical solutions deviate from the spirit and the scope of the technical solutions of the embodiments of the present disclosure.

## Claims

1. An apparatus for detecting a gas based on photoacoustic spectroscopy, comprising a laser emission assembly, a first photoacoustic cell, an acoustic signal detection assembly, a signal amplification assembly, a phase detection assembly, and a visible light emission assembly; wherein

   an output end of the laser emission assembly is aligned with an incident end of the first photoacoustic cell;
   the acoustic signal detection assembly is arranged within the first photoacoustic cell, and an output end of the acoustic signal detection assembly is connected to an input end of the signal amplification assembly;
   an output end of the signal amplification assembly is connected to an input end of the phase detection assembly;
   an output end of the phase detection assembly is connected to the laser emission assembly; and
   the visible light emission assembly is configured to emit visible light towards an exit end of the first photoacoustic cell.

2. The apparatus for detecting the gas based on photoacoustic spectroscopy according to claim 1, wherein

   the laser emission assembly comprises a laser and a function signal generator;
   an output end of the function signal generator is connected to an input end of the laser; and
   an output end of the laser is aligned with the incident end of the first photoacoustic cell.

3. The apparatus for detecting the gas based on photoacoustic spectroscopy according to claim 1, further comprising a collimator; wherein
   one end of the collimator is aligned with the output end of the laser emission assembly, and the other end of the collimator is aligned with the incident end of the first photoacoustic cell.

4. The apparatus for detecting the gas based on photoacoustic spectroscopy according to claim 1, further comprising a second photoacoustic cell and a photoelectric detection assembly; wherein

   the second photoacoustic cell is configured to contain a background gas;

an incident end of the second photoacoustic cell is aligned with the exit end of the first photoacoustic cell, and an exit end of the second photoacoustic cell is aligned with an input end of the photoelectric detection assembly; or the first photoacoustic cell is aligned with the input end of the photoelectric detection assembly.

5. The apparatus for detecting the gas based on photoacoustic spectroscopy according to claim 4, further comprising a waveform display assembly; wherein

an input end of the waveform display assembly is connected to an output end of the photoelectric detection assembly; and
the waveform display assembly is signal-connected to the phase detection assembly.

6. The apparatus for detecting the gas based on photoacoustic spectroscopy according to claim 4, wherein

the visible light emission assembly comprises a visible light source and a beam splitter; and
a first exit direction of the beam splitter corresponds to the incident end of the second photoacoustic cell, a second exit direction of the beam splitter corresponds to the exit end of the first photoacoustic cell, and an incident direction of the beam splitter corresponds to an output end of the visible light source.

7. The apparatus for detecting the gas based on photoacoustic spectroscopy according to claim 4, wherein

the visible light emission assembly comprises a visible light source, a beam splitter, and a reflector;
a first exit direction of the beam splitter corresponds to the incident end of the second photoacoustic cell, a second exit direction of the beam splitter corresponds to the exit end of the first photoacoustic cell, and an incident direction of the beam splitter corresponds to a reflection position of the reflector; and
an output end of the visible light source corresponds to the reflection position.

8. The apparatus for detecting the gas based on photoacoustic spectroscopy according to claim 7, wherein the reflector is a concave reflector.

9. The apparatus for detecting the gas based on photoacoustic spectroscopy according to any one of claims 4 to 8, wherein

the photoelectric detection assembly is a photodetector; and
the waveform display assembly is an oscilloscope.

10. The apparatus for detecting the gas based on photoacoustic spectroscopy according to any one of claims 1 to 8, wherein

the acoustic signal detection assembly is a capacitive microphone;
the signal amplification assembly is a preamplifier; and
the phase detection assembly is a lock-in amplifier.

**FIG. 1**

## INTERNATIONAL SEARCH REPORT

| International application No. |
|---|
| **PCT/CN2022/131048** |

| **A.** | **CLASSIFICATION OF SUBJECT MATTER** |
|---|---|

G01N21/17(2006.01)i;G01N21/3504(2014.01)i;G01N21/39(2006.01)i;G01N21/01(2006.01)i

According to International Patent Classification (IPC) or to both national classification and IPC

| **B.** | **FIELDS SEARCHED** |
|---|---|

Minimum documentation searched (classification system followed by classification symbols)

IPC: G01N

Documentation searched other than minimum documentation to the extent that such documents are included in the fields searched

Electronic data base consulted during the international search (name of data base and, where practicable, search terms used)

CNTXT; CNKI; WPABSC; ENTXTC; WPABS; ENTXT: 南方电网科学研究院, 光声光谱, 光声池, 校准, 校正, 可见光, 激光, 光路, 偏移, photoacoustic spectrum, photoacoustic cell, visible light, laser, calibrat+, light path, adjust+, align+

| **C.** | **DOCUMENTS CONSIDERED TO BE RELEVANT** | |
|---|---|---|

| Category* | Citation of document, with indication, where appropriate, of the relevant passages | Relevant to claim No. |
|---|---|---|
| PX | CN 115219432 A (ELECTRIC POWER RESEARCH INSTITUTE, CHINA SOUTHERN POWER GRID et al.) 21 October 2022 (2022-10-21)<br>claims 1-10 | 1-10 |
| Y | US 2010177316 A1 (WILLIAM MARSH RICE UNIVERSITY) 15 July 2010 (2010-07-15)<br>description, paragraphs [0020]-[0026] and [0033], and figure 1 | 1-10 |
| Y | CN 109765185 A (CHONGQING UNIVERSITY) 17 May 2019 (2019-05-17)<br>description, page 2 paragraphs 1 and 2, and figure 1 | 1-10 |
| Y | CN 104251842 A (ZHEJIANG MEASUREMENT SCIENCE RESEARCH INSTITUTE) 31 December 2014 (2014-12-31)<br>description, paragraphs [0014]-[0024], and figure 1 | 1-10 |
| Y | CN 114200689 A (ANHUI QINGYU PHOTOELECTRIC TECHNOLOGY CO., LTD.) 18 March 2022 (2022-03-18)<br>description, paragraphs [0042]-[0065], and figures 1-8 | 1-10 |
| A | CN 106290220 A (HENAN AGRICULTURAL UNIVERSITY) 04 January 2017 (2017-01-04)<br>entire document | 1-10 |

| ☐ Further documents are listed in the continuation of Box C. | ☑ See patent family annex. |
|---|---|

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **19 April 2023** | **22 May 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/131048**

| Patent document cited in search report | | | Publication date (day/month/year) | Patent family member(s) | | | Publication date (day/month/year) |
|---|---|---|---|---|---|---|---|
| CN | 115219432 | A | 21 October 2022 | None | | | |
| US | 2010177316 | A1 | 15 July 2010 | US | 8098376 | B2 | 17 January 2012 |
| | | | | WO | 2008030250 | A2 | 13 March 2008 |
| | | | | WO | 2008030250 | A3 | 23 April 2009 |
| | | | | US | 2012081708 | A1 | 05 April 2012 |
| | | | | US | 8334980 | B2 | 18 December 2012 |
| CN | 109765185 | A | 17 May 2019 | None | | | |
| CN | 104251842 | A | 31 December 2014 | None | | | |
| CN | 114200689 | A | 18 March 2022 | None | | | |
| CN | 106290220 | A | 04 January 2017 | None | | | |

Form PCT/ISA/210 (patent family annex) (July 2022)

**REFERENCES CITED IN THE DESCRIPTION**

**Patent documents cited in the description**

- CN 202211064408